# EUROPÄISCHE PATENTSCHRIFT

(11) **EP 2 261 541 B1**
(45) Veröffentlichungstag und Bekanntmachung des Hinweises auf die Patenterteilung: **02.07.2014**
(21) Anmeldenummer: 10005121.8
(22) Anmeldetag: 17.05.2010
(51) Int. Cl.: F16L 3/127, F16L 3/00, G09F 3/20

(54) **Flexibler Abwasserschlauch mit einer Aufhängevorrichtung**
Flexible waste water hose with a suspension device
Tuyau flexible d'écoulement d'eaux usées comprenant un dispositif de suspension

(30) Priorität: 28.05.2009 DE 202009007617 U
(43) Veröffentlichungstag der Anmeldung: 15.12.2010
(73) Patentinhaber: TRUPLAST KUNSTSTOFFTECHNIK GMBH, 35428 Langgöns (DE)
(72) Erfinder: Linhart, Georg Peter, 61206 Wöllstadt (DE); Linhart, Christian Norbert, Dr., 35428 Langgöns (DE)
(74) Vertreter: Oppermann, Mark

(56) Entgegenhaltungen:
- DE-A1- 2 357 728
- GB-A- 2 133 072
- US-B1- 6 269 573

## Beschreibung

### TECHNISCHES GEBIET

Die Erfindung betrifft einen Abwasserschlauch mit einer Aufhängevorrichtung, wobei der Abwasserschlauchmit einer aus einem thermoplastischen Kunststoff geformten Anschlussmuffe versehen ist gemäß dem Oberbegriff des Patentanspruchs 1. Derartige für den Sanitärbereich bestimmte Abwasserschläuche werden auch als HT-Rohre bezeichnet, worunter Rohre und Formstücke aus Polypropylen mit Steckmuffe für heißwasserbeständige Abwasserleitungen innerhalb von Gebäuden zu verstehen sind.

### STAND DER TECHNIK

Die in unterschiedlichen Längen hergestellten Abwasserschläuche werden in Baumärkten angeboten, wobei die gewünschte verkaufsfördernde offene Präsentation ohne Verpackung Schwierigkeiten bereitet. Für eine raumsparende Aufhängung der Abwasserschläuche an aus Wänden oder Regalen vorstehenden Verkaufsbügeln wurde bisher zu behelfsmäßigen Mitteln wie Schlauchbindern, Kabelbindern, Gummibändern od.dgl. gegriffen. Seltener werden Abwasserschläuche in Tüten oder Beutel verpackt, weil diese einen zusätzlichen Kostenfaktor darstellen und die Betrachtung der Abwasserschläuche erschweren. Darüber hinaus können Beutel und Tüten unbemerkt geöffnet und der Inhalt entnommen werden.

### AUFGABENSTELLUNG

Der Erfindung liegt die Aufgabe zugrunde, einen Abwasserschlauch bereitzustellen, der eine zuverlässige unverpackte Aufhängung der Abwasserschläuche bei leichter Handhabbarkeit gestattet.

### DARSTELLUNG DER ERFINDUNG

Diese Aufgabe wird durch die im Patentanspruch 1 angegebenen Merkmale gelöst. Vorteilhafte und/oder zweckmäßige weitere Ausgestaltungen der Erfindung gehen aus den Patentansprüchen 2 bis 10 hervor und werden nachfolgend ebenfalls näher beschrieben.

Die erfindungsgemäße Aufhängevorrichtung besteht somit aus zwei Teilen, nämlich einerseits dem bereits bei der Fertigung des Abwasserschlauchs unverlierbar an der Anschlussmuffe anzubringenden Aufhängeelement und andererseits der zu einem beliebigen Zeitpunkt, jedenfalls aber zur Aufhängung des Abwasserschlauchs an den Verkaufsbügel an das Aufhängeelement anzuschließenden Aufhängelasche, die nach Abnahme des Abwasserschlauchs vom Metallbügel leicht entfernt, gegebenenfalls wiederverwendet und aus einem preiswerten Kunststoff hergestellt sein kann. Das gegebenenfalls an der Anschlussmuffe verbleibende Aufhängeelement ist für den Einsatz des betreffenden Abwasserschlauchs in der Regel nicht störend, kann aber auch ohne großen Aufwand entfernt werden.

Vorteilhaft kann das Aufhängeelement die Gestalt eines Zapfens mit verdicktem hinterschnittenen Kopfende aufweisen, der bezüglich der Mittelachse der Anschlussmuffe radial von der Außenwandfläche nach außen vorsteht, wobei die Aufhängelasche eine dem Zapfen komplementär zugeordnete Öffnung besitzt, in welche der Zapfen bei Verrastung der Aufhängelasche mit dem Zapfen eingreift. Auch die umgekehrte Anordnung, also Anbringung des Zapfens an der Aufhängelasche und Anbringung der zugeordneten Öffnung an der Anschlussmuffe, ist möglich.

Der das Aufhängeelement bildende Zapfen ist vorzugsweise bei der Formung der Anschlussmuffe einteilig mit dieser angeformt. Der das Aufhängeelement bildende Zapfen lässt sich mit der Anschlussmuffe problemlos entformen, wenn sich die Mittelachse des Zapfens bei Spritzformung der Anschlussmuffe in der Teilungsebene der zweiteiligen Spritzgussform für die Anschlussmuffe befindet.

Vorzugsweise endet der das Aufhängeelement bildende Zapfen an seinem verdickten hinterschnittenen Kopfende mit einer von der Außenwandfläche der Anschlussmuffe abgelegenen, durch eine Kegelmantelfläche gebildete Spitze. Diese Spitze erleichtert die Einführung des Zapfens in die Öffnung der Aufhängelasche.

Ferner kann vorgesehen sein, dass der das Aufhängeelement bildende Zapfen an seinem an die Außenwandfläche der Anschlussmuffe anschließenden Ende eine Ringkerbe als Sollbruchstelle aufweist. Der das Aufhängeelement bildende Zapfen kann dadurch falls gewünscht einfach durch Abbrechen an der Sollbruchstelle entfernt werden, wenn die Aufhängevorrichtung ihren Zweck erfüllt hat.

In Weiterführung des Erfindungsgedankens kann die dem das Aufhängeelement bildenden Zapfen komplementär zugeordnete Öffnung in der Aufhängelasche zentral innerhalb einer begrenzten Zone verringerter Wanddicke in der Aufhängelasche angeordnet sein, wobei eine an der Öffnung beginnende Schlitzanordnung sich durch die Zone verringerter Wanddicke unter Bildung von mehreren Rastzungen erstreckt, welche nach der Verrastung der Aufhängelasche mit dem das Aufhängeelement bildenden Zapfen hinter das verdickte hinterschnittene Kopfende des Zapfens eingerastet sind. Dieser Verrastungsvorgang ähnelt dem Zusammendrücken der beiden Teile eines an Textilien angebrachten Druckknopfs.

Für eine sichere Aufhängung eines Abwasserschlauchs an einem Verkaufsbügel ist es von Vorteil, wenn die mit dem das Aufhängeelement bildenden Zapfen verrastete Aufhängelasche mittels eines an der Außenwandfläche der Anschlussmuffe abgestützten Vorsprungs der Aufhängelasche einer an der Anschlussmuffe gebildeten Ringschulter bei aufgehängtem Abwasserschlauch in axialer Richtung kraftschlüssig anliegt. Auf diese Weise dient das Aufhängeelement im Wesentlichen der lösbaren Befestigung der Aufhängelasche an der Anschlussmuffe, während die Gewichtsbelastung durch den aufgehängten Abwasserschlauch im Wesentlichen durch die Anlage zwischen dem Vorsprung an der Aufhängelasche und der Ringschulter der Anschlussmuffe aufgenommen wird.

Zweckmäßig kann der Vorsprung der Aufhängelasche in Umfangsrichtung der Anschlussmuffe angeordnet sein, wobei seine Abstützfläche der Kreisbogenkrümmung der Außenwandfläche der Anschlussmuffe folgt. Auf diese Weise ist die beabsichtigte Relativlage zwischen der Aufhängelasche und der Anschlussmuffe zusätzlich stabilisiert.

Schließlich kann in weiterer Ausgestaltung der Erfindung an der Anschlussmuffe dem Aufhängeelement diametral gegenüberliegend ein weiteres identisches Aufhängeelement zur Verrastung mit einer weiteren identischen Aufhängelasche vorgesehen sein. Durch diese bezüglich der Mittelachse des Abwasserschlauchs symmetrische Anordnung lässt sich ein geradlinig senkrechter Verlauf des aufgehängten Abwasserschlauchs erzielen.

### KURZE BESCHREIBUNG DER ZEICHNUNGEN

Weitere Einzelheiten der Erfindung werden nachfolgend anhand der beigefügten Zeichnungen, in denen bevorzugte Ausführungsbeispiele dargestellt sind, näher erläutert. Darin zeigt:
- Fig. 1: eine Seitenansicht der Anschlussmuffe mit abgebrochen dargestelltem Abwasserschlauch und der Vorderansicht der mit dem Aufhängeelement verrasteten Aufhängelasche,
- Fig. 2: den Längsschnitt durch die Anordnung entsprechend der Schnittverlaufslinie II-II in Fig. 1,
- Fig. 3: den vergrößert dargestellten Ausschnitt entsprechend dem Ausschnittskreis III in Fig. 2,
- Fig. 4: eine perspektivische Darstellung der Anschlussmuffe,
- Fig. 5: eine perspektivische Darstellung der Aufhängelasche,
- Fig. 6: die Draufsicht auf die Aufhängelasche entsprechend dem Blickrichtungspfeil VI in Fig. 1 und
- Fig. 7: einen der Fig. 2 ähnlichen Längsschnitt durch die An- ordnung entsprechend einer zweiten Ausführungsform der Erfindung mit zwei diametral gegenüberliegend angeord- neten Aufhängevorrichtungen.

### DETAILLIERTE BESCHREIBUNG DER AUSFÜHRUNGSBEISPIELE

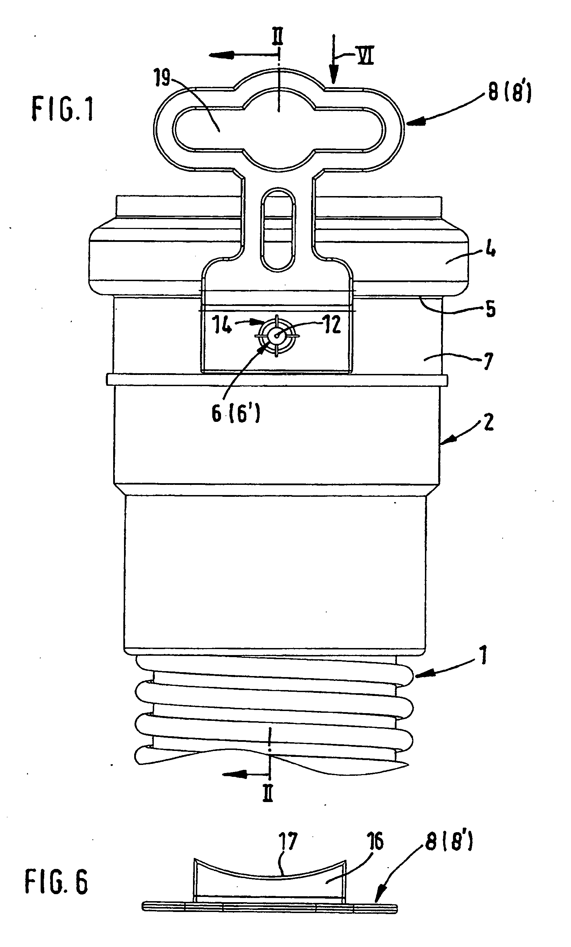

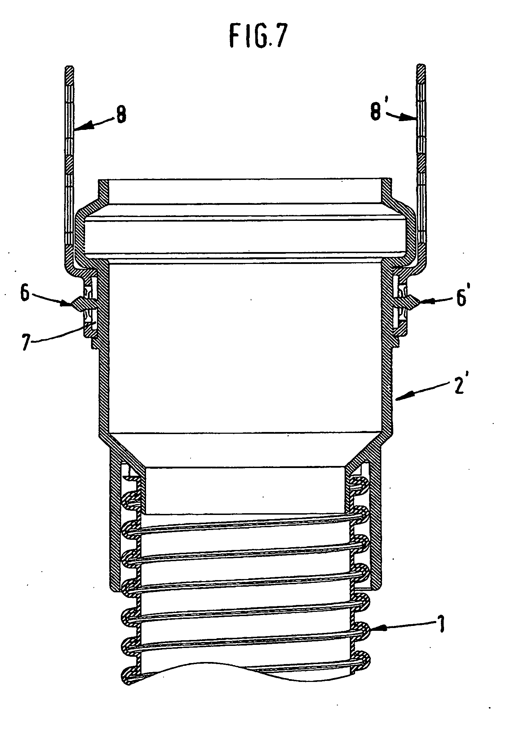

Der in den Fig. 1, 2 und 7 gezeigte Abwasserschlauch 1 ist an seinem dargestellten Ende mit der Anschlussmuffe 2 versehen. Dabei ist der in bekannter Weise aus einem Profilstreifen gewickelte Abwasserschlauch 1 innerhalb eines Ringraums 3 in der Anschlussmuffe 2 befestigt. An ihrem offenen Ende ist die rotationssymmetrische Anschlussmuffe 2 mit einer innen nutförmigen Ausformung 4 versehen, die zur Aufnahme eines nicht dargestellten Dichtungsrings bestimmt ist. Die Ausformung 4 bildet eine außenliegende Ringschulter 5, die für die noch zu beschreibende Aufhängevorrichtung von funktioneller Bedeutung ist.

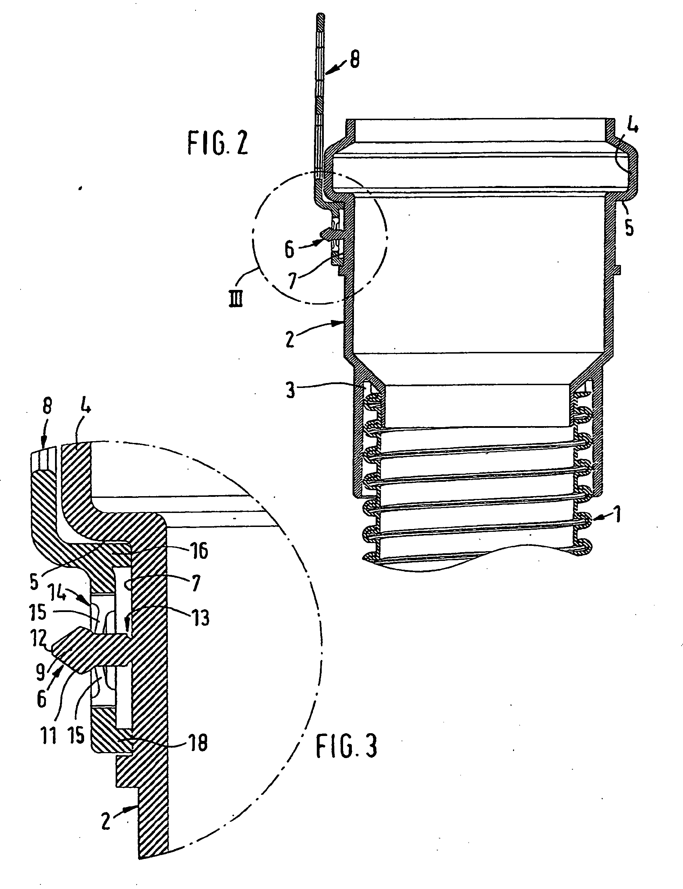

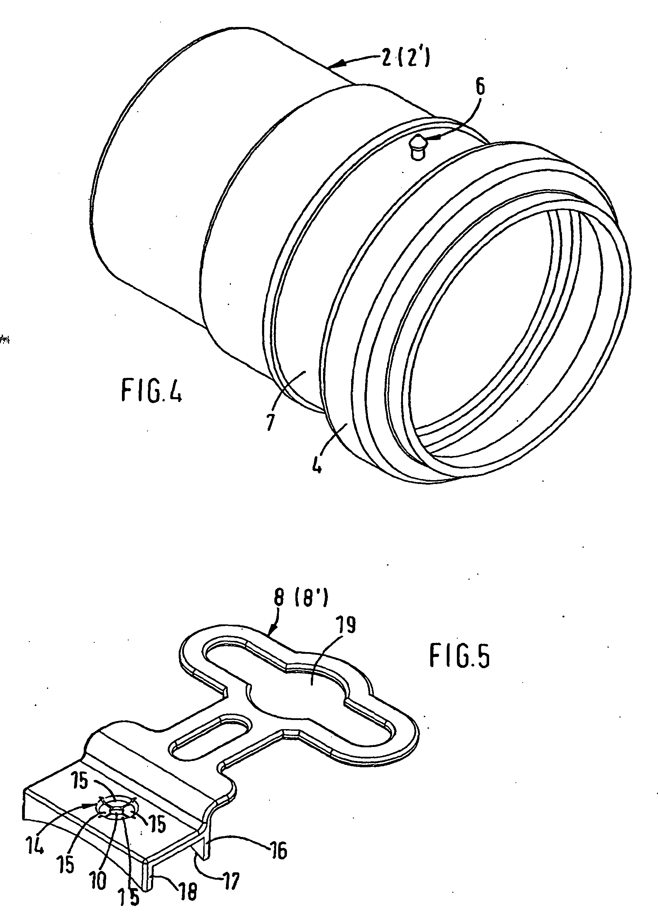

Mit axialem Abstand zu der Ringschulter 5 ist das als Zapfen 6 ausgebildete Aufhängeelement an der Außenwandfläche 7 der Anschlussmuffe 2 angebracht und für die lösbare Verrastung mit der Aufhängelasche 8 ausgebildet. Zu diesem Zweck hat das Aufhängeelement die Gestalt eines Zapfens 6 mit verdicktem hinterschnittenen Kopfende 9, wie Fig. 3 verdeutlicht. Der Zapfen 6 steht bezüglich der Mittelachse der Anschlussmuffe 2 radial von der Außenwandfläche 7 vor. Die Aufhängelasche 8 besitzt eine dem Zapfen 6 komplementär zugeordnete Öffnung 10 (Fig. 5), in welche der Zapfen 6 bei Verrastung der Aufhängelasche 8 mit dem Zapfen 6 eingreift.

Der das Aufhängeelement bildende Zapfen 6 ist bei der Spritzformung der Anschlussmuffe 2 einteilig mit dieser angeformt. Dabei befindet sich der Zapfen 6 in der Teilungsebene der zweiteiligen Spritzgussform (nicht dargestellt) für die Anschlussmuffe 2, so dass die Entformung der Anschlussmuffe 2 aus der Spritzgussform keine Schwierigkeiten bereitet. Der formfallend mit der Anschlussmuffe 2 ausgebildete Zapfen 6 ist die bevorzugte Ausführungsform, jedoch kann der Zapfen auch als getrenntes Teil ausgebildet, beispielsweise aus Metall hergestellt und nachträglich an der Anschlussmuffe 2 auf geeignete Weise fest angebracht sein.

Der Zapfen 6 ist an seinem verdickten hinterschnittenen Kopfende 9 mit einer von der Außenwandfläche 7 abgelegenen durch eine Kegelmantelfläche 11 gebildeten Spitze 12 versehen (Fig.3). Die Spitze 12 erleichtert die Verrastung mit der Öffnung 10 der Aufhängelasche 8. An seinem an die Außenwandfläche 7 anschließenden Ende weist der Zapfen 6 eine Ringkerbe 13 als Sollbruchstelle auf. Der Zapfen 6 kann, muss aber nicht, an der Ringkerbe 13 abgebrochen oder abgeschnitten werden, wenn die Aufhängelasche 8 nach Verkauf des betreffenden Abwasserschlauchs 1 vom Zapfen 6 getrennt wurde.

Die Öffnung 10 in der Aufhängelasche 8 ist zentral innerhalb einer kreisförmig begrenzten Zone 14 verringerter Wanddicke in der Aufhängelasche 8 angeordnet, wie insbesondere die Fig. 3 und 5 verdeutlichen. Eine an der Öffnung 10 beginnende als Kreuzschlitz ausgebildete Schlitzanordnung erstreckt sich durch die Zone 14 verringerter Wanddicke und bildet vier Rastzungen 15. Diese Rastzungen 15 werden beim Verrastungsvorgang mit und durch den Zapfen 6 nach außen abgebogen und rasten hinter dem verdickten hinterschnittenen Kopfende 9 des Zapfens 6 ein, wie das in Fig. 3 dargestellt ist. Die Aufhängelasche 8 ist damit gegen unbeabsichtigtes Lösen von dem Zapfen 6 gesichert.

Die mit dem Zapfen 6 verrastete Aufhängelasche 8 ist mittels eines an der Außenwandfläche 7 abgestützten Vorsprungs 16 der Aufhängelasche 8 an der Außenwandfläche 7 abgestützt. Zugleich liegt der Vorsprung 16 der Ringschulter 5 an und übernimmt bei aufgehängtem Abwasserschlauch 1 im Wesentlichen die axiale durch das Gewicht des Abwasserschlauchs 1 verursachte Belastung. Um eine flächige Anlage des Vorsprungs 16 zu erzielen, ist er in Umfangsrichtung der Anschlussmuffe 2 angeordnet, wobei seine Abstützfläche 17 (Fig. 5, 6) der Kreisbogenkrümmung der Außenwandfläche 7 der Anschlussmuffe 2 folgt.

Wie die Fig. 2, 3 und 5 zeigen kann parallel und mit Abstand zu dem Vorsprung 16 ein weiterer entsprechend ausgebildeter Vorsprung 18 an die Aufhängelasche 8 angeformt sein, der ebenfalls der Außenwandfläche 7 anliegt. Bei mit dem Zapfen 6 verrasteter Öffnung 10 ist die Aufhängelasche 8 daher kippsicher an der Anschlussmuffe 2 befestigt.

Die Aufhängelasche 8 besitzt an ihrem oberen Ende eine Profilöffnung 19, welche das Aufschieben der Aufhängelasche 8 auf die üblichen profilierten Verkaufsbügel (nicht gezeigt) gestattet. In ihrem unteren Bereich liegt die Aufhängelasche 8 der Ausformung 4 der Anschlussmuffe 2 von außen an, während ihr unterer Bereich nach innen in Richtung der Außenwandfläche 7 abgebogen ist und die in den Fig. 2 und 3 gezeigte Lage einnimmt.

In der zweiten Ausführungsform des Abwasserschlauchs mit einer Aufhängevorrichtung ist an der Anschlussmuffe 2' ein dem beschriebenen als Zapfen 6 ausgebildeten Aufhängeelement diametral gegenüberliegend ein weiteres identisches als Zapfen 6' ausgebildetes Aufhängeelement zur Verrastung mit einer weiteren identisch ausgebildeten Aufhängelasche 8' vorgesehen. Auch dieser Zapfen 6' befindet sich in der Teilungsebene der zweiteiligen Spritzgussform für die Anschlussmuffe 2' und behindert die Entformung der Anschlussmuffe 2' aus ihrer Spritzgussform nicht.

Offenbart wird ein flexibler Abwasserschlauch mit einer Aufhängevorrichtung, wobei der Abwasserschlauch mit einer aus einem thermoplastischen Kunststoff geformten Anschlussmuffe versehen ist. Eine Besonderheit besteht dabei darin, dass an der Außenwandfläche der Anschlussmuffe ein fest mit der Anschlussmuffe verbundenes Aufhängeelement angebracht ist, welches für die lösbare Verrastung mit einer Aufhängelasche ausgebildet ist. Im Ergebnis wird eine als Aufhängevorrichtung für flexible Abwasserschläuche bestimmte Vorrichtung bereitgestellt, die eine zuverlässige unverpackte Aufhängung der Abwasserschläuche bei leichter Handhabbarkeit gestattet.

### BEZUGSZAHLENLISTE

- 1: Abwasserschlauch
- 2, 2': Anschlussmuffe
- 3: Ringraum
- 4: Ausformung
- 5: Ringschulter
- 6, 6': Zapfen
- 7: Außenwandfläche
- 8, 8': Aufhängelasche
- 9: Kopfende
- 10: Öffnung
- 11: Kegelmantelfläche
- 12: Spitze
- 13: Ringkerbe
- 14: Zone
- 15: Rastzungen
- 16: Vorsprung
- 17: Abstützfläche
- 18: Vorsprung
- 19: Profilöffnung

## Patentansprüche

1. Flexibler Abwasserschlauch (1) mit einer Aufhängevorrichtung (6, 8), wobei der Abwasserschlauch (1) mit einer aus einem thermoplastischen Kunststoff geformten Anschlussmuffe (2) versehen ist, **dadurch gekennzeichnet, dass** an der Außenwandfläche (7) der Anschlussmuffe (2) ein fest mit der Anschlussmuffe (2) verbundenes Aufhängeelement (6) angebracht ist, welches zusammen mit einer Aufhängelasche (8), die für die lösbare Verrastung mit dem Aufhängeelement (6) ausgebildet ist, die Aufhängevorrichtung bildet.

2. Flexibler Abwasserschlauch nach Anspruch 1, **dadurch gekennzeichnet, dass** das Aufhängeelement die Gestalt eines Zapfens (6) mit verdicktem hinterschnittenen Kopfende (9) aufweist, der bezüglich der Mittelachse der Anschlussmuffe (2) radial von der Außenwandfläche (7) nach außen vorsteht, und dass die Aufhängelasche (8) eine dem Zapfen (6) komplementär zugeordnete Öffnung (10) besitzt, in welche der Zapfen (6) bei Verrastung der Aufhängelasche (8) mit dem Zapfen (6) eingreift.

3. Flexibler Abwasserschlauch nach Anspruch 2, **dadurch gekennzeichnet, dass** der das Aufhängeelement bildende Zapfen (6) bei der Formung der Anschlussmuffe (2) einteilig mit dieser angeformt ist.

4. Flexibler Abwasserschlauch nach Anspruch 3, **dadurch gekennzeichnet, dass** sich die Mittelachse des das Aufhängeelement bildenden Zapfens (6) bei Spritzformung der Anschlüssmuffe (2) in der Teilungsebene der zweiteiligen Spritzgussform für die Anschlussmuffe (2) befindet.

5. Flexibler Abwasserschlauch nach einem der Ansprüche 2 bis 4, **dadurch gekennzeichnet, dass** der das Aufhängeelement bildende Zapfen (6) an seinem verdickten hinterschnittenen Kopfende (9) mit einer von der Außenwandfläche (7) der Anschlussmuffe (2) abgelegenen, durch eine Kegelmantelfläche (11) gebildete Spitze (12) endet.

6. Flexibler Abwasserschlauch nach einem der Ansprüche 2 bis 5, **dadurch gekennzeichnet, dass** der das Aufhängeelement bildende Zapfen (6) an seinem an die Außenwandfläche (7) der Anschlussmuffe (2) anschließenden Ende eine Ringkerbe (13) als Sollbruchstelle aufweist.

7. Flexibler Abwasserschlauch nach einem der Ansprüche 2 bis 6, **dadurch gekennzeichnet, dass** die dem das Aufhängeelement bildenden Zapfen (6) komplementär zugeordnete Öffnung (10) in der Aufhängelasche (8) zentral innerhalb einer begrenzten Zone (14) verringerter Wanddicke in der Aufhängelasche (8) angeordnet ist, wobei eine an der Öffnung (10) beginnende Schlitzanordnung sich durch die Zone (14) verringerter Wanddicke unter Bildung von mehreren Rastzungen (15) erstreckt, welche nach der Verrastung der Aufhängelasche (8) mit dem das Aufhängeelement bildenden Zapfen (6) hinter das verdickte hinterschnittene Kopfende (9) des Zapfens (6) eingerastet sind.

8. Flexibler Abwasserschlauch nach einem der Ansprüche 2 bis 7, **dadurch gekennzeichnet, dass** die mit dem das Aufhängeelement bildenden Zapfen (6) verrastete Aufhängelasche (8) mittels eines an der Außenwandfläche (7) der Anschlussmuffe (2) abgestützten Vorsprungs (16) der Aufhängelasche (8) einer an der Anschlussmuffe (2) gebildeten Ringschulter (5) bei aufgehängtem Abwasserschlauch (1) in axialer Richtung kraftschlüssig anliegt.

9. Flexibler Abwasserschlauch nach Anspruch 8, **dadurch gekennzeichnet, dass** der Vorsprung (16) der Aufhängelasche (8) in Umfangsrichtung der Anschlussmuffe (2) angeordnet ist und seine Abstützfläche (17) der Kreisbogenkrümmung der Außenwandfläche (7) der Anschlussmuffe (2) folgt.

10. Flexibler Abwasserschlauch nach einem der vorhergehenden Ansprüche, **dadurch gekennzeichnet, dass** an der Anschlussmuffe (2') dem Aufhängeelement (6) diametral gegenüberliegend ein weiteres identisches Aufhängeelement (6') zur Verrastung mit einer weiteren identischen Aufhängelasche (8') vorgesehen ist.

## Claims

1. Flexible waste water hose (1) with a suspension device (6, 8), wherein the waste water hose (1) is provided with a connecting sleeve (2) formed from a thermoplastic plastics material, **characterised in that** a suspension element (6) fixedly connected with the connecting sleeve (2) is mounted on the outer wall surface (7) of the connecting sleeve (2) and forms the suspension device together with a suspension strap (8) constructed for detachable detenting with the suspension element (6).

2. Flexible waste water hose according to claim 1, **characterised in that** the suspension element has the form of a pin (6) with a thickened undercut head end (9), which protrudes radially outwardly from the outer wall surface (7) with respect to the centre axis of the connecting sleeve (2), and that the suspension strap (8) has an opening (10), which has complementary association with the pin (6) and in which the pin (6) engages when the suspension strap (8) is detented with the pin (6).

3. Flexible waste water hose according to claim 2, **characterised in that** the pin (6) forming the suspension element is formed integrally with the connecting sleeve (2) when this is formed.

4. Flexible waste water hose according to claim 3, **characterised in that** the centre axis of the pin (6) forming the suspension element is at the time of injection-moulding of the connecting sleeve (2) disposed in the dividing plane of the two-part injection-moulding mould for the connecting sleeve (2).

5. Flexible waste water hose according to any one of claims 2 to 4, **characterised in that** the pin (6) forming the suspension element ends at its thickened undercut head end (9) with a point (12) formed by a cone circumferential surface (11) and offset from the outer wall surface (7) of the connecting sleeve (2).

6. Flexible waste water hose according to any one of claims 2 to 5, **characterised in that** the pin (6) forming the suspension element has at its end connected with the outer wall surface (7) of the connecting sleeve (2) an annular notch (13) as a frangible location.

7. Flexible waste water hose according to any one of claims 2 to 6, **characterised in that** the opening (10), which has complementary association with the pin (6) forming the suspension element, is arranged in the suspension strap (8) centrally within a defined zone (14) of reduced wall thickness in the suspension strap (8), wherein a slot arrangement beginning at the opening (10) extends through the zone (14) of reduced wall thickness while forming a plurality of detent tongues (15), which after detenting of the suspension strap (8) with the pin (6) forming the suspension element are detented behind the thickened undercut head end (9) of the pin (6).

8. Flexible waste water hose according to any one of claims 2 to 7, **characterised in that** when the waste water hose (1) is suspended the suspension strap (8), which is detented with the pin (6) forming the suspension element, bears by means of a projection (16), which is supported at the outer wall surface (7) of the connecting sleeve (2), of the suspension strap (8) by friction couple in axial direction against an annular shoulder (5) formed at the connecting sleeve (2),.

9. Flexible waste water hose according to claim 8, **characterised in that** the projection (16) of the suspension strap (8) is arranged in the circumferential direction of the connecting sleeve (2) and its support surface (17) follows the arc curvature of the outer wall surface (7) of the connecting sleeve (2).

10. Flexible waste water hose according to any one of the preceding claims, **characterised in that** a further, identical suspension element (6') for detenting with a further identical suspension strap (8') is provided at the connecting sleeve (2') diametrically opposite to the suspension element (6).

## Revendications

1. Tuyau flexible d'écoulement d'eaux usées (1) comprenant un dispositif de suspension (6, 8), le tuyau d'écoulement d'eaux usées (1) étant pourvu d'un manchon de raccord (2) moulé en une matière plastique thermoplastique, **caractérisé en ce que** sur la surface de paroi extérieure (7) du manchon de raccordement (2) est placé un élément de suspension (6) relié de manière fixe au manchon de raccord (2), qui, en commun avec une attache de suspension (8) configurée pour l'encliquetage démontable avec l'élément de suspension (6), forme ledit dispositif de suspension.

2. Tuyau flexible d'écoulement d'eaux usées selon la revendication 1, **caractérisé en ce que** l'élément de suspension présente la configuration d'un tenon (6) avec une extrémité de tête (9) renflée et en contre-dépouille, qui fait saillie de la surface de paroi extérieure (7), radialement vers l'extérieur par rapport à l'axe central du manchon de raccordement (2), et **en ce que** l'attache de suspension (8) possède une ouverture (10) associée de manière complémentaire au tenon (6), et dans laquelle vient s'engager le tenon (6) lors de l'encliquetage de l'attache de suspension (8) avec le tenon (6).

3. Tuyau flexible d'écoulement d'eaux usées selon la revendication 2, **caractérisé en ce que** le tenon (6) formant l'élément de suspension est moulé d'un seul tenant avec le manchon de raccordement (2) lors du moulage de celui-ci.

4. Tuyau flexible d'écoulement d'eaux usées selon la revendication 3, **caractérisé en ce que** lors du moulage par injection du manchon de raccordement (2), l'axe central du tenon (6) formant l'élément de suspension se trouve dans le plan de joint du moule de moulage par injection, en deux parties, pour le manchon de raccordement (2).

5. Tuyau flexible d'écoulement d'eaux usées selon l'une des revendications 2 à 4, **caractérisé en ce que** le tenon (6) formant l'élément de suspension se termine, à son extrémité de tête (9) renflée et en contre-dépouille, par une pointe (12) éloignée de la surface de paroi extérieure (7) du manchon de raccordement (2), et formée par une surface périphérique conique (11).

6. Tuyau flexible d'écoulement d'eaux usées selon l'une des revendications 2 à 5, **caractérisé en ce que** le tenon (6) formant l'élément de suspension présente, à son extrémité se raccordant à la surface de paroi extérieure (7) du manchon de raccordement (2), une entaille annulaire (13) en guise de zone de rupture programmée.

7. Tuyau flexible d'écoulement d'eaux usées selon l'une des revendications 2 à 6, **caractérisé en ce que** l'ouverture (10) dans l'attache de suspension (8), qui est associée de manière complémentaire au tenon (6) formant l'élément de suspension, est agencée de manière centrale à l'intérieur d'une zone limitée (14), d'épaisseur de paroi réduite, dans l'attache de suspension (8), un agencement de fentes, qui débutent au niveau de l'ouverture (10), s'étendant à travers la zone (14) d'épaisseur de paroi réduite en formant plusieurs languettes d'encliquetage (15), qui après l'encliquetage de l'attache de suspension (8) avec le tenon (6) formant l'élément de suspension, sont encliquetées derrière l'extrémité de tête (9) renflée et en contre-dépouille, du tenon (6).

8. Tuyau flexible d'écoulement d'eaux usées selon l'une des revendications 2 à 7, **caractérisé en ce que** l'attache de suspension (8) encliquetée avec le tenon (6) formant l'élément de suspension, s'applique dans la direction axiale, par une liaison de transmission de force, au moyen d'une protubérance (16) de l'attache de suspension (8), qui prend appui contre la surface de paroi extérieure (7) du manchon de raccordement (2), sur un épaulement annulaire (5) formé sur le manchon de raccordement (2), lorsque le tuyau flexible d'écoulement d'eaux usées (1) est suspendu.

9. Tuyau flexible d'écoulement d'eaux usées selon la revendication 8, **caractérisé en ce que** la protubérance (16) de l'attache de suspension (8) est agencée dans la direction périphérique du manchon de raccordement (2), et sa surface d'appui (17) suit la courbure en arc de cercle de la surface de paroi extérieure (7) du manchon de raccordement (2).

10. Tuyau flexible d'écoulement d'eaux usées selon l'une des revendications précédentes, **caractérisé en ce que** sur le manchon de raccordement (2') il est prévu, de manière diamétralement opposée à l'élément de suspension (6), un autre élément de suspension (6') identique, destiné à l'encliquetage avec une autre attache de suspension (8') identique.
